# EUROPEAN PATENT APPLICATION

(11) **EP 1 518 510 A1**
(43) Date of publication of application: **30.03.2005**
(21) Application number: 04381016.7
(22) Date of filing: 02.06.2004
(51) Int. Cl.: A61C 5/12

(54) **Element for aiding in the placing of dental fillings**

(30) Priority: 05.06.2003 ES 200301335
(71) Applicant: Corporacion O.I.B., S.L., 09003 Burgos (ES)
(72) Inventor: Jose M., Rodriguez Del Val, 09003, BURGOS (ES)
(74) Representative: Urizar Anasagasti, Jesus Maria

(57) **Abstract**

An element for aiding in the placing of dental fillings, particularly when two adjacent pieces affected with caries are involved, constituted of a disposable element (1), preferably carried out in a plastic or metallic material, with different lengths and thicknesses to be adapted to each patient, having an elongated strip in which a widened lower area (11) is distinguished, suitable for being situated between two dental pieces at the level of the gingival papilla, and a broad upper area (12), thinner and more flexible than the previous one, separating the interproximal space existing between two adjacent dental pieces (2-3).

## Description

As indicated by its title, the present invention refers to an element facilitating the placing of filings when two adjacent dental pieces are involved that are affected with class II (interproximal) and in turn adjacent caries, which cavities must be simultaneously filled, but separating one from the other one.

This is currently solved by placing several matrices or strips, metallic or of a plastic material, of few millimeters in height and few tenths of a millimeter in thickness, which circularly envelope each one of the affected dental pieces, limiting the expansion of the filling (amalgam or cement) like a mini-casing. These matrices separate the two adjacent pieces, which allows for reconstructing the interproximal space in the contact area. However, by approaching towards the edge of the gum, the dental pieces separate and a triangular space (embrasure) remains between them where the gingival papilla is located; to prevent this space from being filled with the filling material, a wedge (usually of wood) is pressure-placed which is later removed along with the mentioned matrices. Said matrices are placed and removed with special instruments; there are also interproximal matrices incorporating springs and/or rings, which are expensive, cumbersome and complex in application, even for a person skilled in the art.

The object of the present invention has its field of application in this specific sector and is constituted of a single and simple element which is a matrix and wedge at the same time, it is placed with dental clamps and is inexpensive and disposable.

This element is carried out in a plastic or metallic material, it has a flexibility making it suitable for its function of being simultaneously introduced into the embrasure (papilla space) and into the interproximal space (contact area) .

This element preferably has two well differentiated areas, a thicker lower area which in turn, at one of the ends, has a greater thickness for the purpose of facilitating the gripping thereof, considered the rear end; whereas at the front end, by means of which it is introduced between two adjacent dental pieces, it becomes narrow to facilitate the insertion of the element into the interdental space. This progressive narrowing of the element occurs in both a lateral and vertical, slightly upwards direction, facilitating the tight introduction into the intermediate area between the two adjacent dental pieces.

The configuration of this element is quite varied taking into account the features previously set forth, the lower area thereof generally has a rectangular section which, from the rear or gripping area to the front or introduction area, progressively decreases in thickness and in height to end in a type of sharp ending; its edges and vertices are finished off so that they do not cause any type of aggression for the patient, for which purpose a circular or oviform section could also be considered, decreasing progressively towards the front end. In another alternative embodiment, this element has a noticeably isosceles triangular profile, with a certain inflection towards the center on its lateral sides, such that the progression from the thinner upper end to the base situated between the two dental pieces at the level of the gingival papilla is carried out more progressively downwards, and as a result it adapts to the profile existing between two normal dental pieces. The thinner and more flexible upper area generally has a smaller length than the wider lower area since this lower area has a wedge function with a pointed and sharp projection in the front area to facilitate introduction, whereas the rear area has a thicker ending so that the dentist can easily grip this element and place it with simple dental clamps.

The advantages of this element are evident since it is very easily introduced between the two dental pieces affected by caries, achieving an effective separation thereof allowing for the placing of the corresponding fillings, and all this without needing to use the matrices or the wedges mentioned above, and as a result, without needing to use any type of matrix-holding instrument.

The object of the present invention will be better understood with the aid of the following description carried out on the basis of a practical embodiment example; this description is carried on the basis of the attached drawings, wherein:
Figures 1 and 2 respectively show different side elevational, profile and plan views and a perspective view of an element for aiding in the placing of dental fillings as proposed in this invention.
Figures 3 and 4 respectively show different elevational, profile and plan views and a perspective view of an embodiment variant of said element.

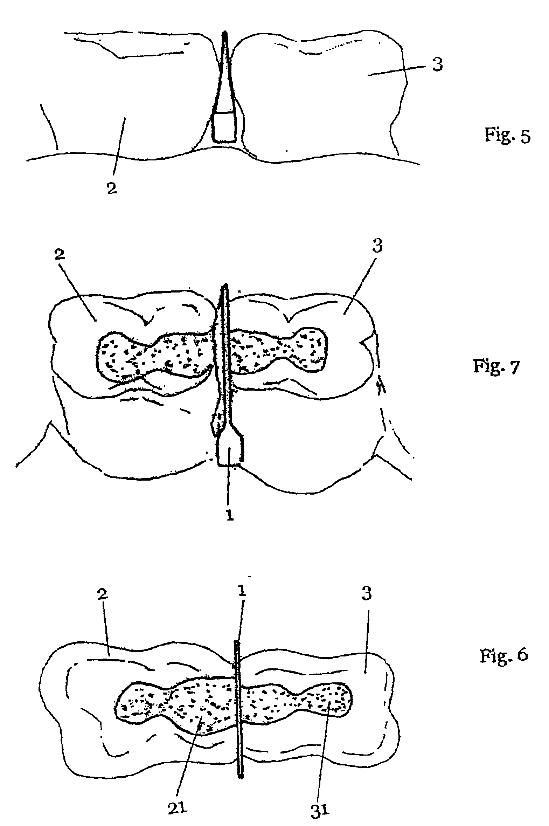

Figures 5, 6 and 7 respectively show elevational, plan and perspective views of an element having these features inserted between two dental pieces in which a filling is going to be placed.

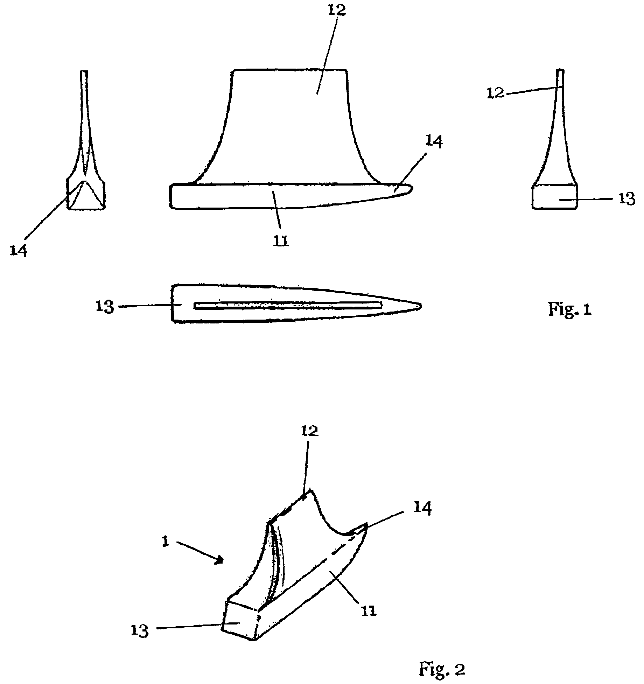

The utensil object of this invention is shown with all its details in Figures 1 and 2, where it is observed that it is constituted of a single element (1), carried out in a plastic or metallic material, having a certain flexibility at least in its upper area. This element will be manufactured with different lengths and thicknesses so that it can be adapted to each patient and to each specific circumstance. Said element (1) generally has an elongated strip in which two clearly differentiated areas are distinguished: a widened lower area (11) suitable for being situated between two dental pieces (2-3) at the level of the gingival papilla, and a broad upper area (12), thinner and more flexible than the previous one, separating the interproximal space existing between two adjacent dental pieces (2-3).

This element (1) has, from the rear end (13), by means of which it is gripped, to the front end (14), by means of which it is introduced between the two adjacent dental pieces (2-3), a progressive narrowing on its sides, ending at its end (14) in a narrow strip-point which is easily insertable into the interdental space. As can also be seen in Figures 1 and 2, this body has a progressive narrowing in the vertical direction towards the front end (14), such that at this area a sharp, slightly upward oriented ending is defined, which quickly and progressively widens towards the rear end (13), adopting in appearance a configuration similar to a toothpick, on which a flexible and elongated tab (12) is arranged, the task of which is to separate the two dental pieces from one another, whereas the base (11) is situated in the gingival papilla area.

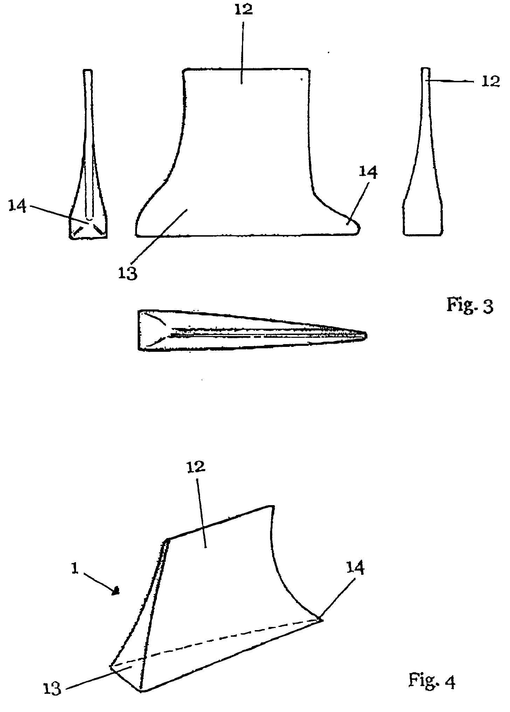

The element (1) shown in Figures 1 and 2 has a rectangular profile base (11), whereas the upper area (12) is thinner and more flexible and has a triangular profile configuration; all the vertices and edges of the element are rounded so that they do not cause any type of aggression on the patient when they are introduced or removed. The element shown in Figures 3 and 4 has an isosceles triangular profile configuration with a certain inward inflection on its side flanks, such that the upper strip (12) likewise has a thin and flexible surface, which can be introduced between two dental pieces even when the latter are very close together, whereas the wider base (11) is situated in the gingival papilla area. This element is specially designed for those cases of persons with smaller-sized molars, or molars projecting to a lesser extent from the gingival papilla in the case shown in Figures 1 and 2.

The narrower upper strip (12) preferably has a shorter length than the lower strip (11), which is wider; thus, the end (14) is introduced, slightly separating the two affected dental pieces, and once this is achieved, the strip (12) is then introduced; at the rear end (13), this strip (12) is also shorter to facilitate gripping thereof by the dentist.

As is observed in these Figures, this element (1) is inserted in the interdental space existing between two molars (2) and (3) which will be subjected to dental fillings (21) and (31), which must be separated, and furthermore a filling (packing) of amalgam or cement in the interdental space below the contact point, which could irritate the gum or which could affect the necessary mobility of the dental pieces in people, is prevented from occurring.

## Claims

1. An element for aiding in the placing of dental fillings, specifically for placing fillings in two adjacent pieces affected with caries which are to be simultaneously filled but which must remain separated by a space at both the level of the gingival papilla and at an upper level between the two adjacent dental pieces, **characterized in that** it is constituted of a disposable element (1), preferably carried out in a flexible plastic or metallic material, with different lengths and thicknesses in order to be adapted to each patient, having an elongated strip in which a widened lower area (11) is distinguished, suitable for being situated between two dental pieces at the level of the gingival papilla (beneath the contact point), and a broad upper area (12), thinner and more flexible than the previous one, separating the interproximal space existing between two adjacent dental pieces (2-3).

2. An element for aiding in the placing of dental fillings according to claim 1, **characterized in that** said element (1) has, from the rear end (13), by means of which it is gripped, to the front end (14), by means of which it is introduced between two adjacent dental pieces, a progressive narrowing of its sides, ending in a narrow strip easily insertable into the interdental space.

3. An element for aiding in the placing of dental fillings according to claims 1 and 2, **characterized in that** said element (1) has, from the rear end (13), by means of which it is gripped, to the front end (14), by means of which it is introduced between two adjacent dental pieces, a progressive narrowing in a lateral and vertical direction, having a sharp upward ending.

4. An element for aiding in the placing of dental fillings according to claims 1 to 3, **characterized in that** this element (1) has a lower area (11) with a noticeably rectangular profile, whereas the upper area (12) of the strip situated between the dental pieces has a triangular profile, and **in that** the vertices and edges of the element are finished off so that they do not cause any type of aggression for the patient.

5. An element for aiding in the placing of dental fillings according to any of claims 1 to 3, **characterized in that** this element has a noticeably isosceles triangular profile with a certain inflection towards the center on its side flanks.

6. An element for aiding in the placing of dental fillings according to any of claims 1 to 5, **characterized in that** along its length, this element has a narrower upper area (12) of a smaller length than the wider lower area (11).
